# EUROPÄISCHE PATENTSCHRIFT

(11) **EP 1 173 917 B1**
(45) Veröffentlichungstag und Bekanntmachung des Hinweises auf die Patenterteilung: **24.05.2006**
(21) Anmeldenummer: 01915313.9
(22) Anmeldetag: 02.03.2001
(51) Int. Cl.: H02K 1/27, H02K 21/22

(54) **STROMERZEUGEREINHEIT AUS GENERATOR UND HUBKOLBENVERBRENNUNGSMOTOR ALS ANTRIEB**
POWER GENERATING INSTALLATION THAT COMPRISES A GENERATOR AND A RECIPROCATING INTERNAL COMBUSTION ENGINE AS DRIVE
UNITE DE PRODUCTION DE COURANT CONSTITUEE D'UN GENERATEUR ET D'UN MOTEUR A COMBUSTION INTERNE A PISTON ALTERNATIF SERVANT DE SYSTEME DE COMMANDE

(30) Priorität: 02.03.2000 DE 10010248
(43) Veröffentlichungstag der Anmeldung: 23.01.2002
(73) Patentinhaber: Motorenfabrik Hatz GmbH & Co. KG, 94099 Ruhstorf (DE)
(72) Erfinder: HATZ, Ernst, 94099 Ruhstorf/Rott (DE); MOSER, Franz, A-4784 Schardenberg (AT)
(74) Vertreter: Grättinger & Partner (GbR)
(86) Internationale Anmeldenummer: PCT/EP2001/002367
(87) Internationale Veröffentlichungsnummer: WO 2001/065661

(56) Entgegenhaltungen:
- DE-A- 4 418 454
- DE-C- 19 721 527
- JP-A- 11 004 555
- US-A- 4 137 884
- US-A- 4 742 258
- US-A- 5 731 647
- PATENT ABSTRACTS OF JAPAN vol. 1997, no. 09, 30. September 1997 (1997-09-30) & JP 09 121485 A (HITACHI METALS LTD), 6. Mai 1997 (1997-05-06)

## Beschreibung

Die Erfindung betrifft eine Stromerzeugereinheit aus Generator- und Hubkolbenverbrennungsmotor als Antrieb, insbesondere aus Synchron-Generator- und Dieselmotor, mit im als Außenläufer ausgebildeten Rotor des Generators zu dessen Erregung im Bereich der Pole angeordneten Dauermagneten und einer Ankerwicklung im Stator.

Eine derartige mit einem Pumpenaggregat kombinierte Stromerzeugereinheit ist in DE 19721527 beschrieben.

Permanent erregte elektrische Maschinen besitzen üblicherweise Dauermagnete, die je Pol aus einem Stück bestehen. Bei dem bekannten Generator besitzt jeder Dauermagnet die Form eines Zylindermantelsegments, welches im Bereich der Pole an dem mit dem Stator gebildeten Luftspalt angrenzt.

Derartige Dauermagnetschalen sind kaum wirtschaftlich herstellbar, jedenfalls nicht mehr in einer Größe, die für Generatoren mit einer Leistung über fünf kVA geeignet ist. Die Montage derartiger einstückiger Dauermagnete ist nur in unmagnetisiertem Zustand möglich, wegen der jede normale Handhabung ausschließenden hohen Magnetkräfte. Die Magnetisierung muß dann umständlich am komplett montierten Rotor vorgenommen werden. Beim Transport großer Dauermagnete besteht wegen ihrer spröden Werkstoffeigenschaften außerdem Bruchgefahr.

Das Dokument JP-A-11004555 beschreibt einen innenlaufenden mehrere Polpaare aufweisenden Rotor einer elektrischen Maschine, bei dem in den Polbereichen des Rotors in axialer Richtung wenigstens einseitig offene Aufnahmetaschen ausgebildet sind, welche mit einer zylindrischen Umfangswand an den mit dem Stator gebildeten Luftspalt angrenzen und daß die Dauermagnete der Polbereiche jeweils durch eine Mehrzahl von Magnetelementen gebildet sind, die in Umfangsrichtung innerhalb der Aufnahmetaschen nebeneinander angeordnet sind.

Demgegenüber liegt der vorliegenden Erfindung die Aufgabe zugrunde, eine wirtschaftliche Lösung für die Bestückung des Rotors des Generators bei einer eingangs genannten Stromerzeugereinheit mit Dauermagneten zum Zwecke der magnetischen Erregung des Generators zu schaffen, insbesondere die vorgenannten Nachteile zu vermeiden.

Diese Aufgabe wird sowohl hinsichtlich der Herstellung der Dauermagnete, als auch in Bezug auf ihre Montage im Rotor einer eingangs genannten Stromerzeugereinheit gemäß dem Kennzeichen von Anspruch 1 gelöst.

Dadurch, daß nach dem Erfindungsvorschlag die Dauermagnete durch eine Mehrzahl relativ kleiner Magnetelemente gebildet sind, wird einerseits deren wirtschaftliche Herstellung ermöglicht. Diese sind nicht nur leicht zu transportieren und in aufmagnetisierter Form herzurichten, sondern lassen sich auch auf einfache Weise montieren. Zu diesem Zweck werden sie einzeln in Umfangsrichtung nebeneinander in geeigneten Aufnahmetaschen des Rotors mit gleichpoliger Ausrichtung angeordnet. Letztere sind, in axialer Richtung gesehen, ein- oder beidseitig offen ausgebildet, so daß deren Bestückung mit Magnetelementen von einer oder beiden Stirnseiten des Rotors her möglich ist. In axialer Richtung durchgehend offen ausgebildete Aufnahmetaschen ermöglichen als vorteilhafte Ausführungsform, daß die Magnetelemente in den Aufnahmetaschen in axialer Richtung wenigstens in zwei Reihen angeordnet werden können. Dabei besteht die Möglichkeit, durch die Magnetelemente bei geeigneter Dimensionierung, Anzahl und Anordnung an jede gewünschte Auslegung des zu erzielenden magnetischen Flusses anzupassen. Zu diesem Zweck können die Magnetelemente mehr oder weniger dicht nebeneinander angeordnet werden; sie können in einer oder in zwei oder sogar in mehreren Reihen in axialer Richtung angeordnet werden. Bei ihrer Dimensionierung ist insbesondere die radiale Dicke zu beachten, welche die Dichte des Magnetflusses wesentlich bestimmt. Demgegenüber sind die Länge und Breite der Magnetelemente für den magnetischen Widerstand eher unkritisch. Letzterer hängt neben der radialen Abmessung der Magnetelemente vielmehr noch von deren Anzahl, d.h. von der Bogenlänge der mit Magnetelementen bestückten Aufnahmetaschen ab. Außerdem läßt sich die Höhe der Erregerspannung noch dadurch leicht verändern, daß von gleich dimensionierten Magnetelementen eine geringere Anzahl verlegt wird, so daß mehr oder weniger große Lücken zwischen benachbarten Magnetelementen entstehen. Diese können ggf. mit Ersatzstücken aus Kunststoff gefüllt werden, welche die Platzhalterrolle übernehmen.

Was die Form der Magnetelemente betrifft, so kann es zweckmäßig sein, deren Länge nach der axialen Abmessung des Rotors zu bestimmen, z.B. indem die axiale Breite des Rotors der mehrfachen, z.B. etwa der doppelten Länge eines Magnetelements entspricht.

Hinsichtlich ihrer Querschnittgestaltung können die Magnetelemente z.B.als Ringsegmente oder rechteckig ausgebildet sein. Im letzteren Fall ist vorteilhaft, wenn in Anpassung daran die radialen Innenflächen der Aufnahmetaschen polygonartig ausgebildet sind, so daß die quaderförmigen Magnetelemente jeweils mit ihren großen Oberflächen auf den Polygonflächen aufliegen.

Zur Verbesserung der Montage der Magnetelemente besteht eine vorteilhafte Ausgestaltung darin, daß wenigstens auf der der umfangswand gegenüberliegenden Innenfläche der Aufnahmetaschen die Abstände zwischen benachbarten Magnetelementen definierende axial verlaufende Rippen vorgesehen sind.

Die Magnetelemente werden in ihrer jeweiligen Montageposition durch die hohen Magnetkräfte festgehalten. Es kann aber auch zweckmäßig sein, die Magnetelemente auf der Innenfläche der Aufnahmetaschen zusätzlich noch durch Kleben zu befestigen oder die Aufnahmetaschen an ihren axial gegenüberliegenden Stirnseiten durch entsprechende Deckel aus Metall oder Kunststoff zu verschließen.

Ebenfalls zur Vereinfachung der Montage oder aus statischen Überlegungen kann es zweckmäßig sein, die Aufnahmetaschen durch axial verlaufende Trennwände in einzelne, jeweils etwa dem Querschnitt eines Magnetelements entsprechende Schubfächer zu unterteilen.

Um zu vermeiden, daß die randseitigen Magnetelemente im Falle eines sogenannten Stoßkurzschlusses durch Ummagnetisierung unbrauchbar werden, ist erfindungsgemäß eine Umlenkung des Magnetflusses in der Weise vorgesehen, daß die Aufnahmetaschen in Umfangsrichtung auf beiden Seiten über das jeweils letzte Magnetelement hinaus verlängert sind. Dadurch werden die Dauermagnete nicht entmagnetisiert.

Durch die erfindungsgemäß vorgesehenen Aufnahmetaschen für die Magnetelemente ergibt sich die Möglichkeit einer einfachen Montage der Magnetelemente, die infolge des magnetischen Rückschlusses nahezu kraftlos positioniert werden können. Zusätzlich kann eine Magnetfeldbeeinflusssung bei der Montage zweckmäßig sein; hierzu kann nach einem weiteren erfindungsgemäßen Vorschlag vorgesehen sein, daß im Rotorinneren bei der Montage ein Stator positioniert wird, welcher zu Montagezwecken derart bestromt wird, daß das Positionieren der Magnetelemente weitgehend kraftlos möglich ist. Dadurch vermeidet man Montageschwierigkeiten infolge starker Abstoßungskräfte zwischen den Magnetelementen. Durch dieses Zusammenwirken der Ausbildung der Aufnahmetaschen einerseits und deren Bestückung mit Dauermagneten in Form kleiner Magnetelemente andererseits wurde ein wirtschaftlicher Weg zur Verwirklichung derartiger Stromerzeugereinheiten mit permanent erregtem Synchron-generator aufgefunden.

Im folgenden wird ein Ausführungsbeispiel der Erfindung anhand der Zeichnung erläutert. Es zeigt
- Fig. 1: einen Axialschnitt durch eine Motor-Generator-Einheit gemäß Schnitt I-I der Fig. 2,
- Fig. 2: eine Ansicht auf den Stator und den Rotor der Motor-Generator-Einheit gemäß Schnitt II-II der Fig. 1,
- Fig. 3: zu Fig. 2 eine teilweise axiale Ansicht des Stators in vergrößerter Darstellung,
- Fig. 4: einen dreidimensionalen Ausschnitt des Rotors mit Dauermagneten und
- Fig. 5: eine Ansicht des Spannungsreglers gemäß Schnitt V-V der Fig. 1.

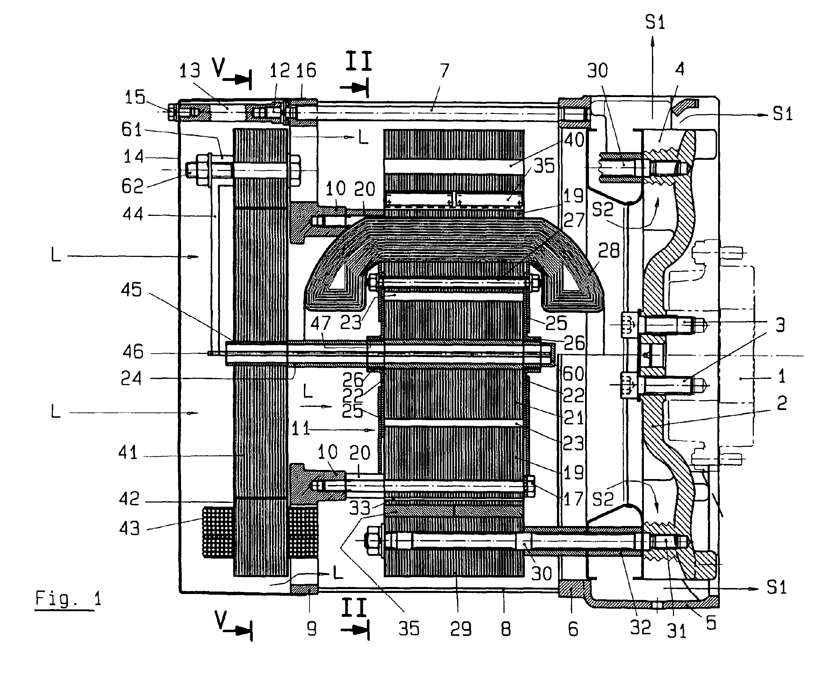

Die in den Fig. 1 bis 3 dargestellte einen Stromerzeuger bildende elektrische Maschine betrifft eine Einheit aus einem Antriebsmotor und einem Synchron-generator. Als Antriebsmotor kommt bevorzugt ein Dieselmotor in Frage, von dem lediglich das anschlußseitige Ende seiner Kurbelwelle 1 strichliert gezeichnet ist. Stirnseitig an der Kurbelwelle 1 ist ein Lüfterrad 2 mittels Schrauben 3 angebaut. Das Lüfterrad 2 besitzt eine Beschaufelung 4 zur Erzeugung eines Luftstroms gemäß Pfeil S1 zur Motorkühlung, wobei die gemäß Pfeil S2 zuströmende Luft der aus dem Generatorgehäuse 8 abströmenden Kühlluft nach der Generatorkühlung entspricht. Wie in Fig. 1 dargestellt, besitzt der (strom-)abflußseitig vorgesehene Generatorgehäusedeckel 9 Ansaugöffnungen für die gemäß Pfeilen L zuströmende Kühlluft. Damit dieser Kühlluftstrom im Generatorgehäuse 8 seine volle Kühlwirkung erzielt, besitzt die Schutzhaube 14 eine oder mehrere (nicht gezeichnete) entsprechend dimensionierte Eintrittsöffnungen für die Kühlluft.

Ein motorseitiges Anschlußgehäuse 5 umschließt den Raum, in dem das Lüfterrad 2 untergebracht ist, radial nach außen; es ist beidseitig offen und besitzt auf seiner dem Motor gegenüberliegenden Seite einen Ringflansch 6 mit Gewindebohrungen zum Eindrehen von Befestigungsschrauben 7 für den Anschluß des zweckmäßig aus Blech gefertigten zylindrischen Generatorgehäuses 8, in dem dieses auf beiden Stirnseiten planflächig eingespannt wird. Die Befestigungsschrauben 7 sind an der Innenseite des Generatorgehäuses 8 anliegend über dessen Umfang verteilt angeordnet und durchspannen die gesamte Gehäuselänge. Am abflußseitigen, in der Zeichnung linken Ende des Generatorhäuses 8 ist ein Generatorgehäusedeckel 9 vorgesehen, welcher an radial nach innen ragenden Speichen einen Deckelinnenring 10 aufweist, an dem der Stator 11 des Generators befestigt ist. Mit ihren abflußseitigen Enden ragen die Schäfte der Befestigungsschrauben 7 durch Bohrungen in dem Generatorgehäusedeckel 9 hindurch; an ihren freien Gewindeenden 12 sind Schraubbolzen 13 aufgeschraubt, die der Befestigung des Generatorgehäuses 8 am Generatorgehäusedeckel 9 sowie der Schutzhaube 14 mittels kurzer Schrauben 15 dienen; diese werden von außen durch entsprechende Bohrungen in der Schutzhaube 14 in Gewindebohrungen der zugewandten Enden der Schraubbolzen 13 eingeschraubt. Die Schutzhaube 14 übergreift mit ihrem das offene Ende bildenden Randabschnitt 16 das zugeordnete freie Ende des Generatorgehäusedeckels 9 von außen.

Während über den Umfang verteilt gemäß dem vorliegenden Ausführungsbeispiel acht Befestigungsschrauben 7 vorgesehen sind, genügen zur Befestigung des Stators an dem Deckelinnenring 10 sechs Statorschrauben 17, welche durch Bohrungen des Blechpakets eines Statoraußenteils 19 hindurchgeführt sind und über Distanzhülsen 20 zwischen dem Deckelinnenring 10 und der zugewandten Seite des Statoraußenteils 19 mit dem Deckelring 10 verschraubt sind. Der Statoraußenteil 19 wird auf diese Weise gehäusefest fixiert, wobei das den Statoraußenteil 19 bildende Blechpaket durch die Statorschrauben 17 zusammengespannt wird.

Das einen Statorinnenteil 21 bildende Blechpaket ist auf einer Hohlwelle 24 drehfest angeordnet. Die Hohlwelle 24 ist über ihre Endkappe 60 mit einem in der Wellenachse angeordneten, mit Vorspannung eingesetzten Torsionsstab 46 verbunden. Sie ist auf Lagerbuchsen 47 in Lagerflanschen 26 von Hüllblechen 22 verdrehbar gelagert, welche an gegenüberliegenden Stirnseiten des Blechpakets angeordnet sind. Das der Endkappe 60 gegenüberliegende Ende des Torsionsstabs 46 ist über eine stabfeste Stütze 44 gehäusefest fixiert. Deren Befestigungsauge 61 sitzt auf einer Schraube 62, welche das Blechpaket des Jocheisens 42 zusammenspannt. Die Hüllbleche 22 überdecken einen Steuerluftspalt 23 zwischen dem Statorinnenteil 21 und dem Statoraußenteil 19. Da somit das den Statorinnenteil 21 bildende Blechpaket drehfest auf der Hohlwelle 24 sitzt, macht es deren Verdrehung zum Zwecke der erwünschten Konstantregelung der Generatorspannung mit. Die Verstellung des Statorinnenteils 21 gegenüber dem Statoraußenteil 19 zum Zwecke der Spannungsregelung des Generators wird weiter unten noch im Detail beschrieben.

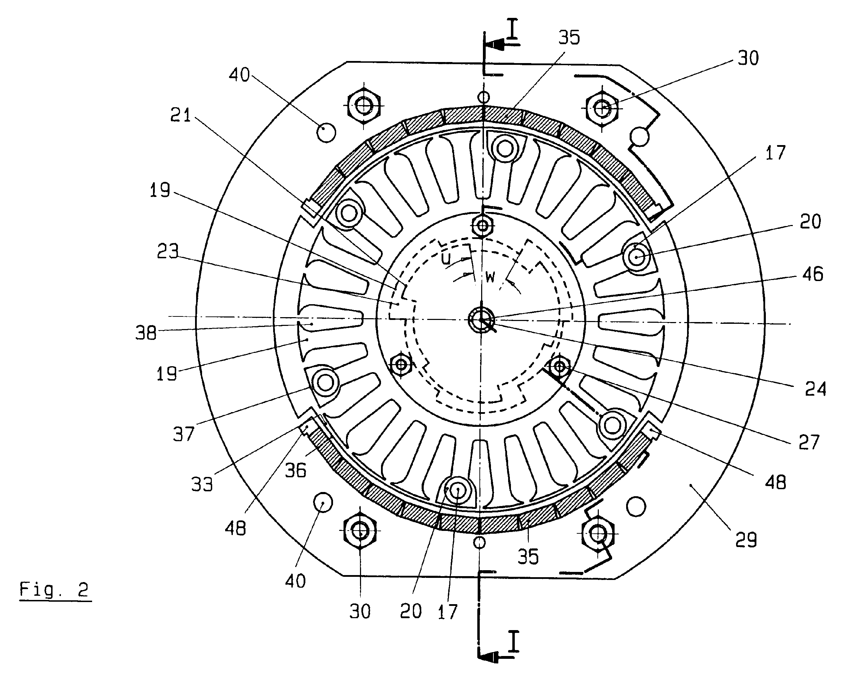

Die Ansicht gemäß Fig. 2 zeigt - ohne die in Fig. 1 dargestellte Isolierplatte 25, die zur Verbesserung der Ansicht weggelassen ist -, nicht nur die Kontur des den Rotor 29 bildenden Blechpakets, sondern auch diejenige der den Stator bildenden Blechpakete, welche im Bereich des Statoraußenteils 19 Ausschnitte 38 zur Aufnahme der Wicklungsstränge der Drehstromwicklung 28 des Generators aufweisen. Der Statoraußenteil 19 ist mittels durch Bohrungen 39 seines Blechpakets geführten Statorschrauben 17 an dem in Fig. 1 gezeigten Deckelinnenring 10 befestigt. Entsprechend der gewählten Schnittführung erkennt man auch die Distanzhülsen 20, welche das Blechpakte des Statoraußenteils 19 gegen den Deckelinnenring 10 abstützen.

Drei Halteschrauben 27 dienen der Zentrierung des Statorinnenteils 21 innerhalb des Statoraußenteils 19 mittels seitlicher Hüllbleche 22, in deren Lagerflanschen 26 die Hohlwelle 24 mit dem Blechpaket des Statorinnenteils 21 gelagert ist.

Die Hüllbleche 22 werden nach außen hin im Bereich des Steuerluftspalts 23 jeweils noch von einer Isolierplatte 25 überdeckt, welche der elektrischen Isolierung der Drehstromwicklung 28 des Generators sowie dreier am Umfang verteilt angeordneter Halteschrauben 27 gegenüber dem Hüllblech 22 dient. Die Halteschrauben 27 verlaufen durch Bohrungen in dem den Statoraußenteil 19 bildenden Blechpaket. Sie sind mittels Isolationshülsen gegen das Blechpaket isoliert und zentrieren über die Hüllbleche 22 den Statorinnenteil 21 gegenüber dem Statoraußenteil 19.

Der Stator 11 ist umgeben vom Rotor 29, welcher ebenfalls aus einem Blechpaket aufgebaut ist, welches mittels Spannschrauben 30 zusammengespannt wird, die mit einem motorseitigen Gewindeende 31 in entsprechende Gewindebohrungen des Lüfterrads 2 eingeschraubt sind. Zwischen Lüfterrad und der zugeordneten Seite des Rotors 29 sind auf die Spannschrauben 30 aufgeschobene Stützhülsen 32 eingespannt. Damit ist der Rotor 29 drehfest mit dem Lüfterrad 2 verbunden. An seinem Innenumfang bildet er einen schmalen ca. 2 mm breiten Luftspalt 33 gegenüber dem Stator 11. Außerdem besitzt der Rotor 29 in axialer Richtung durchgehende etwa zylinderförmig innerhalb zweier Polsegmente verlaufende Taschen 34, in welche von beiden Seiten Magnetelemente 35 in Form schmaler barrenförmiger Stäbe eingeschoben sind, und zwar im vorliegenden Beispiel, wie man aus Fig. 2 erkennt, je Pol zwei Reihen von jeweils zehn nebeneinander angeordneten Magnetelementen 35, welche für die magnetische Erregung des Generators verantwortlich sind. Im Bereich der Taschen 34 begrenzt die innere Konturlinie 36 der die Taschen 34 radial nach innen begrenzenden Umfangswand 50 des Rotors 29 zusammen mit der äußeren Konturlinie 37 des Stators 11 den schmalen Luftspalt 33. Bohrungen 40 in den Rotorblechen dienen für den Einbau eines (nicht gezeigten) Anlassers.

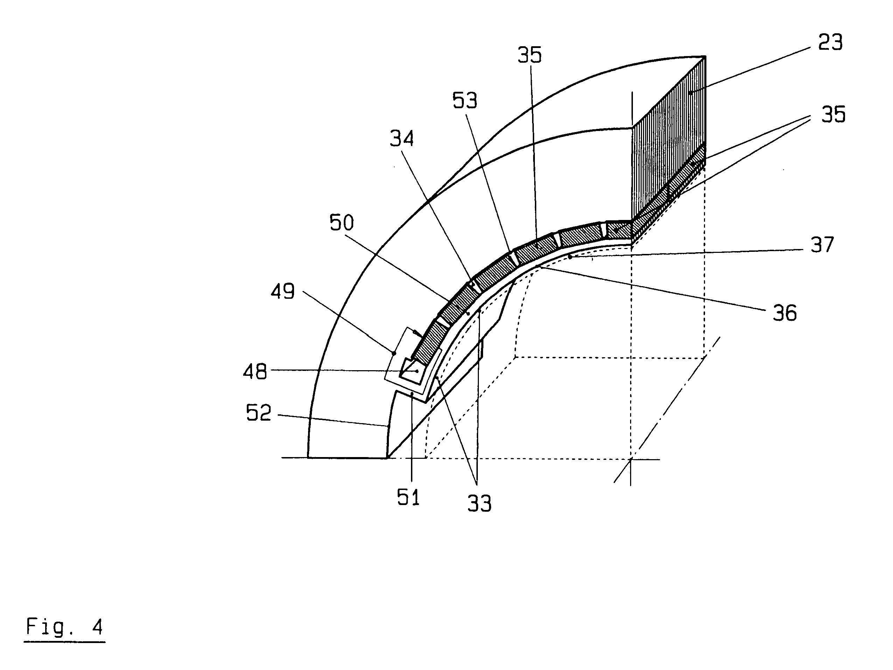

Gemäß Fig. 2 und 4 werden die Magnetelemente 35 axial in die Taschen 34 eingeschoben, so daß sie polygonartig verteilt dicht nebeneinander liegend die beiden Pole bilden. Durch die Unterteilung der Dauermagnete für die Pole in kleine Magnetelemente 35 wird deren kostengünstige Herstellung ermöglicht; deren Montage wird durch einen geeigneten magnetischen Rückschluß 49 sehr erleichtert, weil dadurch die gegenseitige Abstoßung benachbarter Magnetelemente 35 praktisch entfällt. Die einzelnen Magnetelemente 35 können in die Taschen 34 nahezu kraftlos eingeschoben werden. Dabei erübrigt sich eine besondere Befestigung der Magnetelemente 35, denn diese werden im Betrieb durch ihre Magnetkräfte in axialer Richtung gehalten und in den Taschen in radialer Richtung gesehen abgestützt, so daß sie den im Betrieb auftretenden Fliehkräften ohne weiteres standhalten.

In der räumlichen Darstellung der Magnetanordnung gemäß Fig. 4 ist am Ende des Ausschnitts, in dem die Magnetelemente 35 sitzen, ein Hohlraum 48 vorgesehen. Ohne diesen Hohlraum 48 würde im Falle eines Stoßkurzschlusses des Generators die außerordentlich hohe Flußdichte in diesem Bereich zur Ummagnetisierung und somit zur Zerstörung des äußeren Magnetelements 35 führen. Durch die Ausbildung des Hohlraums 48 mit einem definierten magnetischen Rückschluß 49 kann diese Ummagnetisierung vermieden werden. Der Hohlraum 48 ist gebildet durch eine Verlängerung der inneren Umfangswand 50 der Taschen 34 und einen an die benachbarte Pollücke 52 angrenzenden Brückensteg 51, durch den der magnetische Rückfluß 49 verläuft. Axial verlaufende Rippen 53 an den Innenseiten der Taschen 34 definieren die Abstände zwischen den Magnetelementen 35.

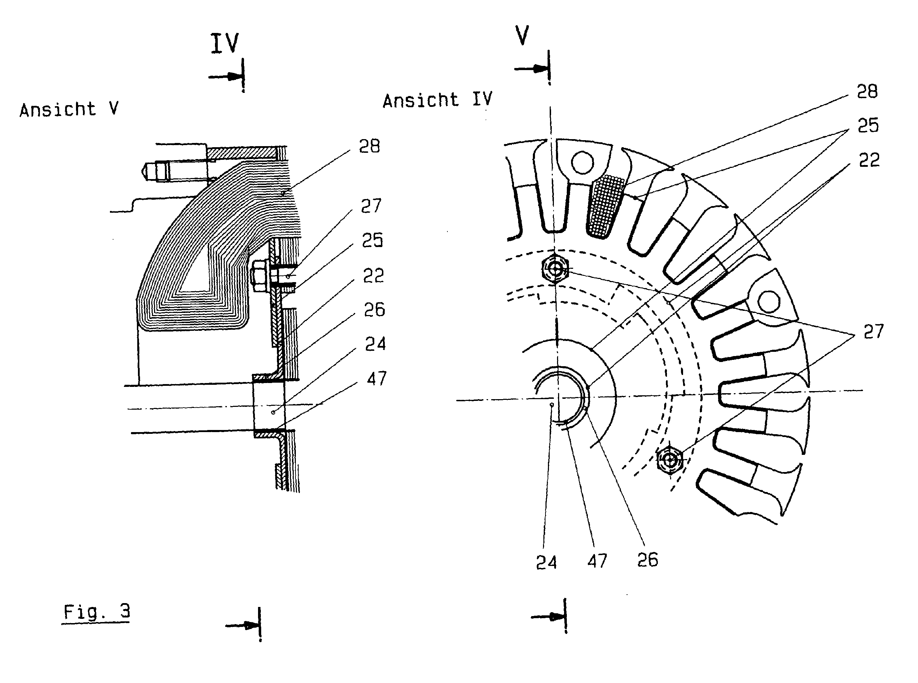

Fig. 3 stellt zur Verdeutlichung einen vergrößerten Ausschnitt von Fig. 2 dar, wobei übereinstimmende Teile mit denselben Bezugszeichen bezeichnet sind. Isolierplatte 25 und Hüllblech 22, welches der Positionierung des Statorinnenteils 21 dient, sind in Fig. 3 jeweils mit Bezugslinien an Außen- und Innenkontur angegeben. Die Lagerbuchse 47 ist stirnseitig dargestellt. In einem Ausschnitt 38 des Statoraußenteils 19 sind Wikkeldrähte der Drehstromwicklung 28 im Schnitt gezeichnet.

Der veränderbare Steuerluftspalt 23 zwischen dem Statoraußenteil 19 und dem Statorinnenteil 21 ist wesentlich für das Funktionsprinzip der Spannungsregelung des Generators. Die an den Steuerluftspalt 23 angrenzenden Umfangsflächen des Statorinnenteils 21 einerseits und des Statoraußenteils 19 andererseits sind dreifach über den Umfang segmentiert ausgebildet, wobei die drei einzelnen Segmente etwa schraubenartig verlaufende, von der Kreisform abweichende vorspringende Umfangsabschnitte aufweisen. Beispielsweise verkleinert sich der Steuerluftspalt 23, wenn man ausgehend von der strichliert eingezeichneten Position den Statorinnenteil 21 gegenüber dem Statoraußenteil 19 in Richtung des Uhrzeigersinns gemäß Pfeil U (Fig. 2) verdreht, wobei die Endposition etwa bei einem Verdrehweg gemäß dem Winkel w erreicht ist. In dieser Endposition ist der Steuerluftspalt 23 am kleinsten.

Durch Verdrehen des Statorinnenteils 21 gegenüber dem Statoraußenteil 19 wird wie beschrieben die Geometrie des Steuerluftspalts 23 und damit der magnetische Widerstand im Stator 11 geändert. Dieser Umstand wird bei der vorliegenden permanent erregten Synchronmaschine zur Spannungsregelung verwendet. Durch die beschriebene Veränderung des magnetischen Flusses ist es möglich, die induzierte Spannung zu regeln, wobei eine direkte Proportionalität zwischen letzterer und dem magnetischen Fluß besteht. Dadurch, daß der Statorinnenteil 21 auf einer Hohlwelle 24 mit vorgespanntem Torsionsstab 46 sitzt, werden der Kraftwirkung des magnetischen Feldes auf den Statorinnenteil 21 entgegenwirkende Torsionskräfte mobilisiert, so daß die zum Zwecke der Spannungsregelung angewandte Verdrehung des Statorinnenteils 21 gegenüber dem Statoraußenteil 19 mittels eines Drehmagneten 41 nahezu kraftlos vonstatten geht. Dies setzt allerdings voraus, daß die Torsionsvorspannung der magnetischen Rückstellkraft angepaßt wird.

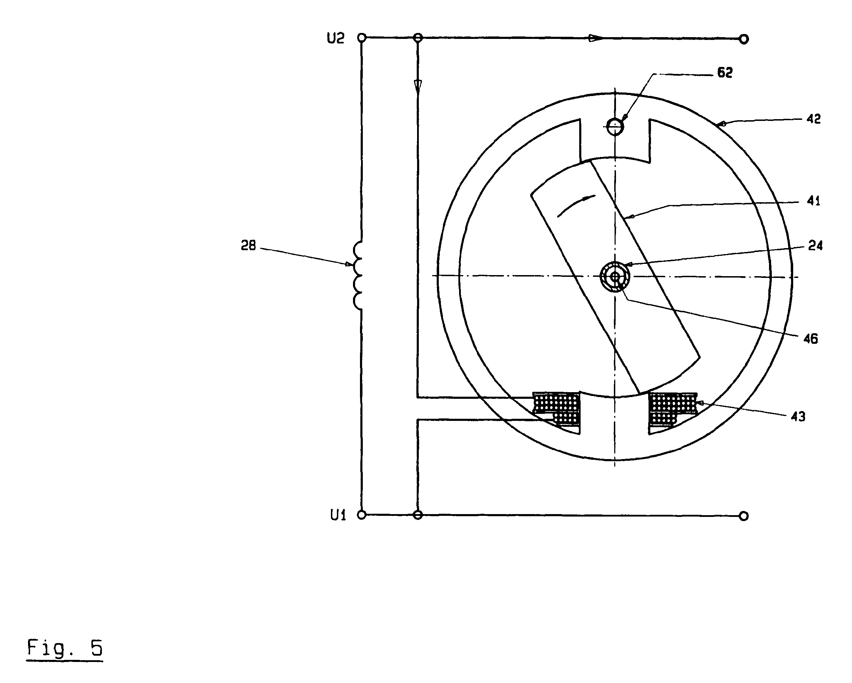

Der in den Fig. 1 und 5 dargestellte Drehmagnet 41 ist im Inneren eines Jocheisens 42 angeordnet, welches eine von der Generatorklemmenspannung gesteuerte Wicklung 43 trägt. Dabei führen Spannungsschwankungen an der Generatorwicklung zu einer Verdrehung des Drehmagneten 41 und bewirken somit durch eine Relativdrehung zwischen den beiden Statorteilen die gewünschte Konstantregelung der Spannung. Gemäß Fig. 1 ist der Drehmagnet 41 auf dem zugeordneten Ende der Hohlwelle 24 fliegend gelagert, welche wiederum drehfest mit dem Statorinnenteil 21 verbunden ist. Der Drehmagnet 41 sitzt zentrisch auf einem Lagerabschnitt 45 am Ende der Hohlwelle 24 und ist dort gegen eine Schulter der Hohlwelle 24 aufgepreßt. Bevorzugt sind der Drehmagnet 41 mit zugehörigem Joch 42 jeweils geblecht ausgebildet.

Gemäß Fig. 5 ist noch die elektrische Schaltung zur Betätigung des Drehmagneten 41 gezeichnet. Die an einem der Pole des Jocheisens 42 angebrachte Wicklung 43 liegt an der Klemmenspannung U1, U2 der Generatorwicklung 28 an. Dabei verhält sich der magnetische Fluß direkt proportional zur indizierten Spannung und steuert die Drehung des Drehmagneten 41 und über die Hohlwelle 24 auch des Statorinnenteils 21, wodurch die Geometrie des Steuerluftspalts 23 und damit der magnetische Widerstand im Stator 11 verändert wird. Das Ergebnis ist eine einfache, vom Leistungsfaktor cos ϕ unabhängige Regelung der Klemmenspannung des Generators.

## Patentansprüche

1. Stromerzeugereinheit aus Generator und Hubkolbenverbrennungsmotor als Antrieb, insbesondere Synchrongenerator und Dieselmotor, mit im als Außenläufer ausgebildeten Rotor des Generators zu dessen Erregung im Bereich der Pole angeordneten Dauermagneten und einer Ankerwicklung (28) im Stator,
**dadurch gekennzeichnet,**
**daß** in den Polbereichen des zweipolig ausgebildeten Rotors (29) in axialer Richtung wenigstens einseitig offene Aufnahmetaschen (34) ausgebildet sind, welche mit einer zylindrischen Umfangswand (50) an den mit dem Stator (11) gebildeten Luftspalt (33) angrenzen und
**daß** die Dauermagnete der Polbereiche jeweils durch eine Mehrzahl von Magnetelementen (35) gebildet sind, die in Umfangsrichtung innerhalb der Aufnahmetaschen (34) nebeneinander angeordnet sind.

2. Stromerzeugereinheit nach Anspruch 1,
**dadurch gekennzeichnet,**
**daß** die Magnetelemente (35) in den Aufnahmetaschen (34) in axialer Richtung wenigstens in zwei Reihen hintereinander angeordnet sind.

3. Stromerzeugereinheit nach Anspruch 1,
**dadurch gekennzeichnet,**
**daß** die Aufnahmetaschen (34) in axialer Richtung durchgehend offen ausgebildet sind und die Dicke der Umfangswand (50) etwa der halben radialen Dicke der Magnetelemente (35) entspricht.

4. Stromerzeugereinheit nach Anspruch 3,
**dadurch gekennzeichnet,**
**daß** die Aufnahmetaschen (34) in Umfangsrichtung auf beiden Seiten über das jeweils letzte Magnetelement (35) hinaus unter Ausbildung eines Hohlraumes (48) verlängert sind.

5. Stromerzeugereinheit nach Anspruch 4,
**dadurch gekennzeichnet,**
**daß** sich im Bereich des Hohlraums (48) die Umfangswand (50) fortsetzt, wobei deren Stärke unter Berücksichtigung der Dimensionierung des Hohlraums (48) derart bemessen wird, daß keine Entmagnetisierung der randnahen Magnetelemente (35) als Folge eines Stoßkurzschlusses eintritt.

6. Stromerzeugereinheit nach Anspruch 4,
**dadurch gekennzeichnet,**
**daß** die Aufnahmetaschen (34) mit einem radialen Brückensteg (51) an das Zwischenpolsegment (52) des Rotors (29) angrenzen.

7. Stromerzeugereinheit nach Anspruch 1,
**dadurch gekennzeichnet,**
**daß** die radialen Innenflächen der Aufnahmetaschen (34) entsprechend der Form der Magnetelemente (35) polygonartig ausgebildet sind.

8. Stromerzeugereinheit nach Anspruch 1,
**dadurch gekennzeichnet,**
**daß** wenigstens auf der der Umfangswand (50) gegenüberliegenden Innenfläche der Aufnahmetaschen (34) die Abstände zwischen benachbarten Magnetelementen (35) definierende, axial verlaufende Rippen (53) vorgesehen sind.

9. Stromerzeugereinheit nach Anspruch 1,
**dadurch gekennzeichnet,**
**daß** die axiale Breite des Rotors (29) etwa der doppelten Länge eines Magnetelements (35) entspricht.

10. Stromerzeugereinheit nach Anspruch 1,
**dadurch gekennzeichnet,**
**daß** die Magnetelemente (35) auf der Innenfläche der Aufnahmetaschen (34) durch Kleben befestigt sind.

11. Stromerzeugereinheit nach Anspruch 1,
**dadurch gekennzeichnet,**
**daß** die Aufnahmetaschen (34) an ihren axial gegenüberliegenden Stirnseiten durch Deckel verschlossen sind.

12. Stromerzeugereinheit nach Anspruch 1,
**dadurch gekennzeichnet,**
**daß** die Aufnahmetaschen (34) durch axial verlaufende Trennwände in einzelne, jeweils etwa dem Querschnitt eines Magnetelements (35) entsprechende Schubfächer unterteilt sind.

13. Stromerzeugereinheit nach Anspruch 1,
**dadurch gekennzeichnet,**
**daß** die Magnetelemente (35) im Querschnitt rechteckig sind.

14. Stromerzeugereinheit nach Anspruch 1,
**dadurch gekennzeichnet,**
**daß** die Magnetelemente (35) im Querschnitt als Ringsegmente ausgebildet sind.

15. Verfahren zum Bestücken des Rotors bei einer Stromerzeugereinheit gemäß Anspruch 1 mit Magnetelementen (35),
**dadurch gekennzeichnet,**
**daß** bereits aufmagnetisierte Magnetelemente (35) verwendet werden und daß der Stator (11) oder eine magnetisch gleichwertige Hilfsvorrichtung zur Montage innerhalb des Rotors lose positioniert wird, derart, daß das Positionieren der Magnetelemente (35) weitgehend kraftlos möglich ist, und
**daß** die Magnetelemente (35) nach dem Positionieren in ihrer Lage befestigt werden, wobei der Stator (11) oder die Hilfsvorrichtung zum Positionieren der Magnetelemente (35) bestromt wird.

## Claims

1. Power generating installation that comprises a generator and a reciprocating internal combustion engine as drive, in particular synchronous generator and diesel engine, with permanent magnets arranged in the rotor of the generator, designed as an outer rotor, for excitation of the generator in the region of the poles, and with an armature winding (28) in the stator,
**characterised in that** at receiving pockets (34), which are open on at least one side, are formed in the pole regions of the rotor (29), designed as a two-pole rotor, in the axial direction, which pockets lie adjacent, with a cylindrical peripheral wall (50), to the air gap (33) formed with the stator (11), and **in that** the permanent magnets of the pole regions are each formed by a plurality of magnetic elements (35) which are arranged beside each other inside the receiving pockets (34) in the peripheral direction.

2. Power generating installation according to Claim 1,
**characterised in that** the magnetic elements (35) are arranged one behind the other, in at least two rows, in the receiving pockets (34) in the axial direction.

3. Power generating installation according to Claim 1,
**characterised in that** the receiving pockets (34) are designed so that they are open throughout in the axial direction, and **in that** the thickness of the peripheral wall (50) is approximately equal to half the radial thickness of the magnetic elements (35).

4. Power generating installation according to Claim 3,
**characterised in that** the receiving pockets (34) are extended in the circumferential direction on both sides beyond each magnetic element (35), forming a cavity (48).

5. Power generating installation according to Claim 4,
**characterised in that** the peripheral wall (50) continues in the region of the cavity (48), wherein its thickness is dimensioned, taking into consideration the dimensioning of the cavity (48), so that no de-magnetisation of the magnetic elements (35) close to the edge takes place as a result of a maximum current short-circuit.

6. Power generating installation according to Claim 4,
**characterised in that** the receiving pockets (34) lie adjacent, with a radial bridge web (51), to the intermediate pole segment (52) of the rotor (29).

7. Power generating installation according to Claim 1,
**characterised in that** the radial inner faces of the receiving pockets (34) are given a polygonal shape corresponding to the shape of the magnetic elements (35) .

8. Power generating installation according to Claim 1,
**characterised in that** ribs (53) defining the distances between adjacent magnetic elements (35), and running axially, are provided at least on the inner face of the receiving pockets (34) opposing the peripheral wall (50).

9. Power generating installation according to Claim 1,
**characterised in that** the axial width of the rotor (20) is approximately equal to twice the length of a magnetic element (35).

10. Power generating installation according to Claim 1,
**characterised in that** the magnetic elements (35) are secured to the inner face of the receiving pockets (34) by gluing.

11. Power generating installation according to Claim 1,
**characterised in that** the receiving pockets (34) are sealed by covers on their axially opposing front sides.

12. Power generating installation according to Claim 1,
**characterised in that** the receiving pockets (34) are divided by axially running partitions into individual drawers each corresponding approximately to the cross-section of a magnetic element (35).

13. Power generating installation according to Claim 1,
**characterised in that** the magnetic elements (35) are rectangular in cross-section.

14. Power generating installation according to Claim 1,
**characterised in that** the magnetic elements (35) are as annular segments in their cross-section.

15. Method for fitting the rotor with magnetic elements (35) in a power generating installation according to claim 1,
**characterised in that** magnetic elements (35) that are already magnetised are used, and **in that** the stator (11) or a magnetically equivalent auxiliary device is loosely positioned for assembly inside the rotor, so that positioning of the magnetic elements (35) is possible largely without force, and **in that** the magnetic elements (35) are secured in their position after positioning, wherein current is passed through the stator (11) or the auxiliary device for positioning the magnetic elements (35).

## Revendications

1. Unité de production de courant constituée d'un générateur et d'un moteur à combustion interne à pistons alternatifs comme moyen d'entraînement, plus particulièrement d'un générateur synchrone et d'un moteur diesel, avec dans le rotor du générateur conformé en rotor extérieur, pour l'excitation de celui-ci, des aimants permanents disposés dans la région des pôles et avec un enroulement de stator,
**caractérisée par le fait que** dans la région des pôles du rotor (29) de type bipolaire sont aménagés des logements (34) ouverts d'un côté au moins dans la direction axiale, qui par une paroi périphérique (50) cylindrique sont contigus à un entrefer (33) défini avec le stator (11) et
que les aimants permanents des régions des pôles sont formés chaque fois d'une pluralité d'éléments magnétiques (35) disposés les uns à côté des autres dans la direction périphérique, à l'intérieur des logements (34).

2. Unité de production de courant selon la revendication 1,
**caractérisée par le fait que** les éléments magnétiques (35) dans les logements (34), dans la direction axiale, sont disposés en au moins deux rangées successives.

3. Unité de production de courant selon la revendication 1,
**caractérisée par le fait que** les logements (34) sont ouverts aux deux extrémités dans la direction axiale et que l'épaisseur de la paroi périphérique (50) correspond approximativement à la moitié de l'épaisseur radiale des éléments magnétiques (35).

4. Unité de production de courant selon la revendication 3,
**caractérisée par le fait que** les logements (34) dans la direction périphérique se prolongent des deux côtés au delà du dernier élément magnétique (35) pour former une cavité (48).

5. Unité de production de courant selon la revendication 4,
**caractérisée par le fait que** la paroi périphérique (50) se prolonge dans la région de la cavité (48), l'épaisseur de celle-ci étant dimensionnée en tenant compte de la taille de la cavité (48), de telle sorte que qu'il n'y ait pas de démagnétisation des éléments magnétiques (35) proches du bord suite à un court-circuit.

6. Unité de production de courant selon la revendication 4,
**caractérisée par le fait que** les logements (34) sont contigus par un pontet (51) au segment entre pôles (52) du rotor (29).

7. Unité de production de courant selon la revendication 1,
**caractérisée par le fait que** les surfaces intérieures radiales des logements (34) sont conformées en polygone, en accord avec la forme de l'élément magnétique,.

8. Unité de production de courant selon la revendication 1,
**caractérisée par le fait qu'**au moins sur la surface intérieure des logements (34) en vis-à-vis de la paroi périphérique (50), sont prévues des nervures (53) axiales qui définissent les distances entre éléments magnétiques (35) voisins.

9. Unité de production de courant selon la revendication 1,
**caractérisée par le fait que** la largeur axiale du rotor (29) correspond sensiblement au double de la longueur d'un élément magnétique (35).

10. Unité de production de courant selon la revendication 1,
**caractérisée par le fait que** les éléments magnétiques (35) sont fixés par collage à la surface intérieure des logements (34).

11. Unité de production de courant selon la revendication 1,
**caractérisée par le fait que** les logements (34) au niveau de leurs faces frontales axialement opposées sont fermés par des capots.

12. Unité de production de courant selon la revendication 1,
**caractérisée par le fait que** les logements (34) sont divisés par des cloisons axiales en différents casiers adaptés sensiblement à la section transversale d'un élément magnétique (35).

13. Unité de production de courant selon la revendication 1,
**caractérisée par le fait que** les éléments magnétiques (35) présentent une section transversale rectangulaire.

14. Unité de production de courant selon la revendication 1,
**caractérisée par le fait que** les éléments magnétiques (35) en section transversale sont conformés en segments d'anneaux.

15. Procédé d'assemblage d'un rotor dans une unité de production de courant selon la revendication 1 avec des éléments magnétiques (35)
**caractérisé par le fait**
**qu'**on utilise des éléments magnétiques (35) prémagnétisés et
**qu'**on positionne le stator (11) ou un dispositif auxiliaire de montage magnétiquement équivalent librement à l'intérieur du rotor, de telle sorte que la mise en place des éléments magnétiques (35) puisse avoir lieu dans une large mesure sans effort et
**qu'**on fixe les éléments magnétiques (35) après leur mise en place, le stator (11) ou le dispositif auxiliaire étant alimenté en courant à des fins de positionnement des aimants élémentaires (35).
